# EUROPÄISCHE PATENTSCHRIFT

(11) **EP 1 096 628 B1**
(45) Veröffentlichungstag und Bekanntmachung des Hinweises auf die Patenterteilung: **07.07.2004**
(21) Anmeldenummer: 99810990.4
(22) Anmeldetag: 01.11.1999
(51) Int. Cl.: H02G 1/12

(54) **Verfahren und Einrichtung zum Abtrennen der Abschirmung von einem Kabel**
Method and device for stripping the shield of a cable
Méthode et dispositif pour dépouiller l'écran d'un câble

(43) Veröffentlichungstag der Anmeldung: 02.05.2001
(73) Patentinhaber: Schleuniger Holding AG, 3608 Thun (CH)
(72) Erfinder: Amrein, Alois, 8640 Rapperswil (CH)
(74) Vertreter: Althoff, Gerhard

(56) Entgegenhaltungen:
- DE-A- 4 327 356
- US-A- 5 074 169

## Beschreibung

Die Erfindung bezieht sich auf ein Verfahren und eine Einrichtung zum Abtrennen und Entfernen der von einem Isolationsmantel freigelegten Abschirmung eines elektrischen Kabels gemäss dem Oberbegriff des Anspruchs 1 sowie auf eine Einrichtung zur Durchführung des Verfahrens gemäss dem Oberbegriff des Anspruchs 6.

Aus der US-A 5,074,169 ist zum Abtrennen der aus einem Drahtgeflecht bestehenden Abschirmung von einem Kabel eine Einrichtung bekannt, bei welcher das Kabel von einem ersten Greifelement klemmend gehalten und von einem zweiten Greifelement die Abschirmung in axialer Richtung gegen eine erste Führungshülse geschoben und dabei an der zylindrischen Stirnseite zu einem in radialer Richtung orientierten Ringwulst verformt wird, wobei der Ringwulst mittels einer in axialer Richtung zuführbaren und stirnseitig als hohlzylindrischer Prägestempel ausgebildeten zweiten Führungshülse durch eine Stanzwirkung abgetrennt und auf den zylindrischen Teil der ersten Führungshülse geschoben wird. Die mit dieser Einrichtung hergestellten Kabelenden haben den Nachteil, dass die verformte Abschirmung oftmals nicht exakt genug oder nur teilweise abgetrennt und folglich einzelne freigelegte Metalldrähte aufspleissen oder ausfasern können, welche zur Herstellung eines exakten elektrischen Anschlusses in einem zusätzlichen manuellen Vorgang kosten- und zeitaufwendig entfernt werden müssen.

Eine ähnliche Einrichtung zum Abtrennen und Entfernen der Abschirmung von einem Kabel ist aus der US-A 3,153,358 bekannt, bei welcher die Abschirmung an dem zylindrischen Absatz eines Führungskörpers zu einem in radialer Richtung orientierten Ringwulst zusammengepresst und mittels eines. in axialer Richtung zuführbaren und stirnseitig als hohlzylindrischer Prägestempel ausgebildeten Druckkörpers durch eine Stanzwirkung abgetrennt und auf den zylindrischen Teil des zylindrischen Absatzes geschoben wird. Auch bei dieser Einrichtung besteht der Nachteil, dass die Abschirmung nicht exakt genug abgetrennt und einzelne aufgespleisste Metalldrähte für einen einwandfreien elektrischen Anschluss manuell entfernt werden müssen.

Zum Entfernen einer Isolierung von einem Litzenkabel ist aus der DE-A 43 27 356 eine Vorrichtung bekannt, bei welcher die von mindestens zwei radial zuführbaren Schneidmessern eingekerbte und von zwei relativ zueinander verschiebbaren Spannblöcken gehaltene Isolierung zu einem Faltenbalg verformt und bei einer axialen Schiebebewegung von der als hohlzylindrischer Prägestempel wirkenden Spitze eines Hülsenkörpers durch eine Stanzwirkung derart abgetrennt wird, dass der abgetrennte Faltenbalg auf den zylindrischen Teil des Hülsenkörpers schiebbar und dabei gegen mindestens zwei radial nach aussen orientiert an dem zugeordneten Spannblock vorgesehene keilförmige Kanten in Form einer Quetschwirkung in axialer Richtung durchtrennt wird.

Weiterhin ist aus der EP-A 0 297 484 eine Anordnung für Abschneide- und/oder Abisoliervorrichtungen bekannt, bei welcher mindestens drei in einer Ebene liegende Halte-, Zentrier- oder Messerbacken derart zwangsgesteuert verschiebbar oder verschwenkbar sind, dass jedem Durchmesser eines Kabels ein anderer Punkt jeder Schneide zugeordnet ist und die Isolierung zum Abziehen eines hülsenförmigen Teilstücks an einer einzigen Umfangslinie geschnitten wird. Eine um einen zusammengepressten Ringwulst einer Abschirmung herumführbare und zum Abschneiden eines zirkulären Teilstücks der Abschirmung ausgebildete Schneideinheit ist bei dieser Vorrichtung nicht vorgesehen.

Der Erfindung liegt die Aufgabe zugrunde, ein Verfahren sowie eine Einrichtung zur Durchführung des Verfahrens zu schaffen, mittels welchem/welcher auf einfache und wirtschaftliche Weise an dem einen von dem Isolationsmantel befreiten Ende eines Kabels eine die elektrischen Leiter umhüllende Abschirmung zur Erreichung eines einwandfreien elektrischen Anschlusses entfernt werden kann, ohne dass dabei die im Profilquerschnitt gesehene geometrische Anordnung von zwei, drei oder mehreren elektrischen Leitern zueinander verändert wird, wobei diese Anforderung auch bei relativ dünnen Kabeln zu gewährleisten ist.

Gelöst wird diese Aufgabe gemäss der Erfindung durch die im Anspruch 1 angegebenen Merkmale, wobei eine Einrichtung zur Durchführung des erfindungsgemässen Verfahrens sich aus dem Anspruch 6 ergibt. Weitere Merkmale hinsichtlich des Verfahrens und der Einrichtung ergeben sich aus den jeweils abhängigen Unteransprüchen.

Hierdurch ist es möglich, dass mittels der in Umfangsrichtung des Kabels um den zusammengeschobenen Ringwulst herumgeführten Schneideinheit das oberhalb des Isolationsmantels zusammengepresste Teilstück exakt abgeschnitten und somit ein Aufspleissen einzelner Drähte der Abschirmung verhindert wird. Eine zeit- und kostenaufwendige manuelle Nachbearbeitung durch Abtrennen einzelner Drähte ist nicht erforderlich, so dass der elektrische Anschluss problemlos erfolgen kann. Ein besonders exakter Schneidvorgang wird dann erreicht, wenn das zusammengepresste zirkuläre Teilstück des Ringwulstes mittels der einschwenkbaren Schneideinheit unmittelbar am Isolationsmantel in Umfangsrichtung abgeschnitten wird.

Weitere Merkmale sowie Vorteile hinsichtlich des Verfahrens sowie der Einrichtung und weitere Einzelheiten der Erfindung ergeben sich aus den Patentansprüchen, der nachstehenden Beschreibung und der Zeichnung.

Die Erfindung wird nachstehend anhand der Zeichnung beschrieben. Es zeigt:
- **Fig. 1A bis Fig. 1K**: einen in verschiedenen Phasen dargestellten Ablauf zum Abtrennen und Entfernen eines Teilstücks von einem in axialer Richtung zusammengepressten Ringwulst einer freigelegten Kabelabschirmung;
- **Fig.2A bis Fig. 2D**: den in grösserem Massstab sowie in verschiedenen Phasen dargestellten Ablauf der in axialer Richtung zusammengepressten und abgetrennten Abschirmung von dem Kabel;
- **Fig.3**: eine in Ansicht und teilweise im Schnitt dargestellte Einrichtung zum Klemmen und Abtrennen des Teilstücks der Abschirmung von dem abisolierten Ende des Kabels;
- **Fig.4**: ein gemäss der in Fig.3 eingezeichneten Linie IV-IV im Schnitt dargestelltes Teilstück der Einrichtung; und
- **Fig.5**: eine in schematischer Ansicht dargestellte Klemmvorrichtung für die Einrichtung gemäss Fig.3 und Fig.4.

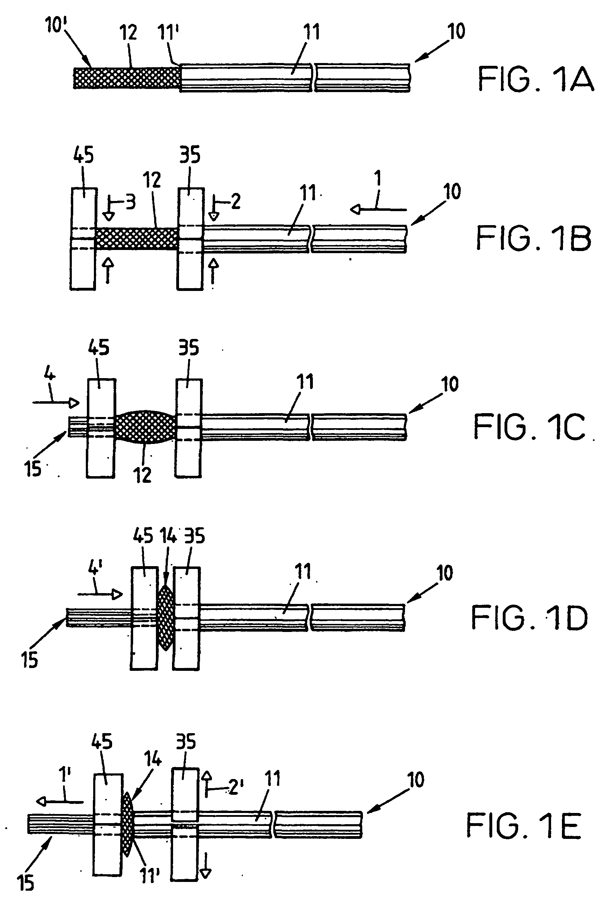

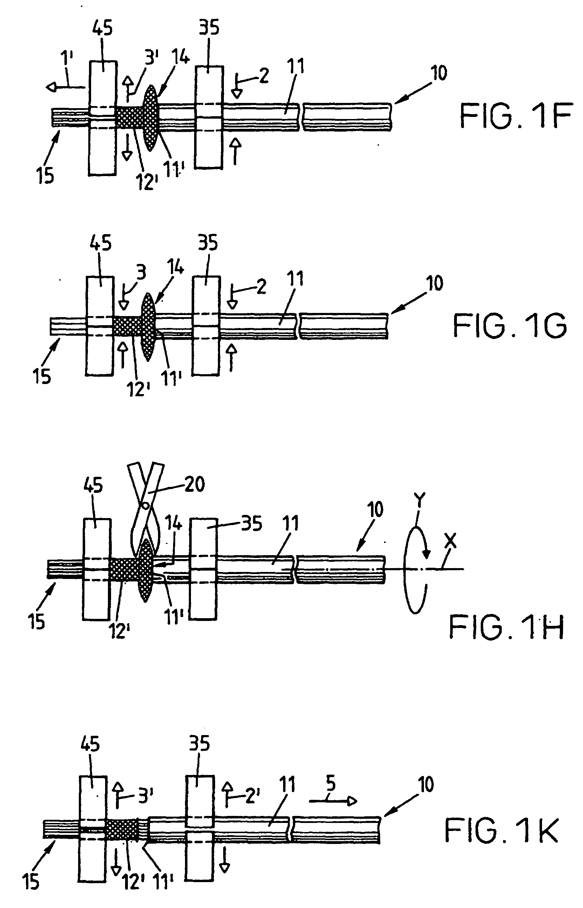

Fig. 1A bis Fig. 1K zeigen einzelne in verschiedenen Phasen schematisch dargestellte Verfahrensschritte zum Entfernen der freigelegten Abschirmung von einem Kabel. Bei dem dargestellten Kabel handelt es sich beispielsweise um ein handelsübliches, abgeschirmtes Kabel, welches mindestens zwei oder mehrere von einer nicht dargestellten transparenten Hülle in Form eines Bündels zusammengehaltene elektrische Leiter, eine die elektrischen Leiter und eine nicht dargestellte Beilauflitze umhüllende Abschirmung sowie einen die Abschirmung umhüllenden Isolationsmantel umfasst.

Fig. 1A zeigt das mit dem äusseren Isolationsmantel 11 versehene Kabel 10, bei welchem an dem einen Ende 10' ein Teilstück des Isolationsmantels 11 mit nicht dargestellten Mitteln entfernt und die darunter liegende Abschirmung 12 freigelegt ist. Für einen einwandfreien elektrischen Anschluss der hier nicht näher dargestellten elektrischen Leiter 15 ist es erforderlich, die beispielsweise aus einem Drahtgeflecht oder dergleichen bestehende und die elektrischen Leiter 15 umhüllende Abschirmung 12 exakt und möglichst nahe an der kreisringförmigen Stirnseite 11' des Isolationsmantels 11 abzutrennen und zu entfernen.

Bei der in Fig. 1B dargestellten Phase wird das Kabel 10 einer ersten schematisch dargestellten Klemmvorrichtung 35 sowie einer relativ dazu in Längsrichtung des Kabels 10 verschiebbaren und schematisch dargestellten zweiten Klemmvorrichtung 45 zugeführt. Das gemäss Pfeilrichtung 1 zugeführte Kabel 10 durchdringt dabei die erste Klemmvorrichtung 35 und wird mit der freigelegten Abschirmung 12 bis zu einem nicht dargestellten ersten Anschlag in die zweite Klemmvorrichtung 45 eingeschoben. Anschliessend wird die erste Klemmvorrichtung 35 gemäss Pfeilrichtung 2 und die zweite Klemmvorrichtung 45 gemäss Pfeilrichtung 3 geschlossen. Das Schliessen der beiden Klemmvorrichtungen 35 und 45 erfolgt derart, dass die erste Klemmvorrichtung 35 das Kabel 10 am Isolationsmantel 11 festhält ohne dabei denselben zu beschädigen. Die zweite Klemmvorrichtung 45 steht mit geringerem Anpressdruck derart mit der freiliegenden Abschirmung 12 in Eingriff, dass die Abschirmung 12 noch relativ zu den elektrischen Leitern 15 in Richtung der ersten Klemmvorrichtung 35 verschiebbar ist.

Bei der in Fig. 1C dargestellten Phase wird die mit der Abschirmung 12 in Eingriff stehende zweite Klemmvorrichtung 45 gemäss Pfeilrichtung 4 in Richtung der feststehenden und geschlossenen ersten Klemmvorrichtung 35 geschoben. Hierbei wird die Abschirmung 12 zwischen den beiden Klemmvorrichtungen 35 und 45 sukzessive in Umfangsrichtung radial nach aussen verformend zusammengepresst. In dieser Phase werden die von der transparenten Hülle (nicht dargestellt) in etwa gestreckter Lage zusammengehaltenen elektrischen Leiter 15 sukzessive freigelegt. Die transparente Hülle wird anschliessend für den elektrischen Anschluss mit geeigneten Mitteln in nicht dargestellter Weise entfernt.

Bei der in Fig. 1D dargestellten Phase wird die zweite Klemmvorrichtung 45 soweit in Pfeilrichtung 4' geschoben, dass die Abschirmung 12 zwischen den beiden Klemmvorrichtungen 35 und 45 zu einem zusammengepressten und im äusseren Bereich etwa keilförmig ausgebildeten Ringwulst 14 verformt ist. In dieser Phase sind die beiden radial nach aussen orientierten und hier nicht näher dargestellten Wulstwände der Abschirmung 12 aneinanderliegend zusammengepresst und die aus der zweiten Klemmvorrichtung 45 in etwa gestreckter Lage herausragenden elektrischen Leiter 15 freigelegt.

Bei der in Fig. 1E dargestellten Phase wird die erste Klemmvorrichtung 35 gemäss Pfeilrichtung 2' wieder geöffnet und anschliessend das mit einem nicht näher dargestellten Endstück der Abschirmung 12 noch klemmend mit der zweiten Klemmvorrichtung 45 in Eingriff stehende Kabel 10 gemäss Pfeilrichtung 1' relativ zu der ersten Klemmvorrichtung 35 gezogen. Die in Pfeilrichtung 1' orientierte Bewegung der zweiten Klemmvorrichtung 45 zusammen mit dem Kabel 10 wird durch einen einstellbaren und in Fig. 1E nicht dargestellten zweiten Anschlag begrenzt.

Bei der in Fig. 1F dargestellten Phase wird die erste Klemmvorrichtung 35 gemäss Pfeilrichtung 2 wieder geschlossen und mit dem Isolationsmantel 11 des Kabels 10 klemmend in Eingriff gebracht. Anschliessend wird die zweite Klemmvorrichtung 45 gemäss Pfeilrichtung 3' geöffnet und zusammen mit dem Kabel 10 gemäss Pfeilrichtung 1' relativ zu der ersten Klemmvorrichtung 35 ezogen. In der Endstellung ist der zirkular zusammengepresste und an der kreisringförmigen Stirnseite 11' des Isolationsmantels 11 anliegende Ringwulst 14 der Abschirmung 12 zwischen den beiden Klemmvorrichtungen 35 und 45, vorzugsweise mittig zwischen den beiden Klemmvorrichtungen 35 und 45 angeordnert und positioniert. In dieser Stellung ragen die von dem Teilstück 12' der Abschirmung 12 umhüllten elektrischen Leiter 15 noch teilweise aus der zweiten Klemmvorrichtung 45.

Bei der in Fig. 1G dargestellten Phase ist die mit dem Isolationsmantel 11 klemmend in Eingriff stehende erste Klemmvorrichtung 35, wie in Fig. 1F dargestellt, noch geschlossen, während die zweite Klemmvorrichtung 45 gemäss Pfeilrichtung 3 geschlossen wird. In dieser Stellung ist die Abschirmung 12 mit dem Teilstück 12' in der zweiten Klemmvorrichtung 45 angeordnet und wird mit geringerem Anpressdruck gehalten. Die elektrischen Leiter 15 ragen dabei analog Fig. 1F aus der zweiten Klemmvorrichtung 45.

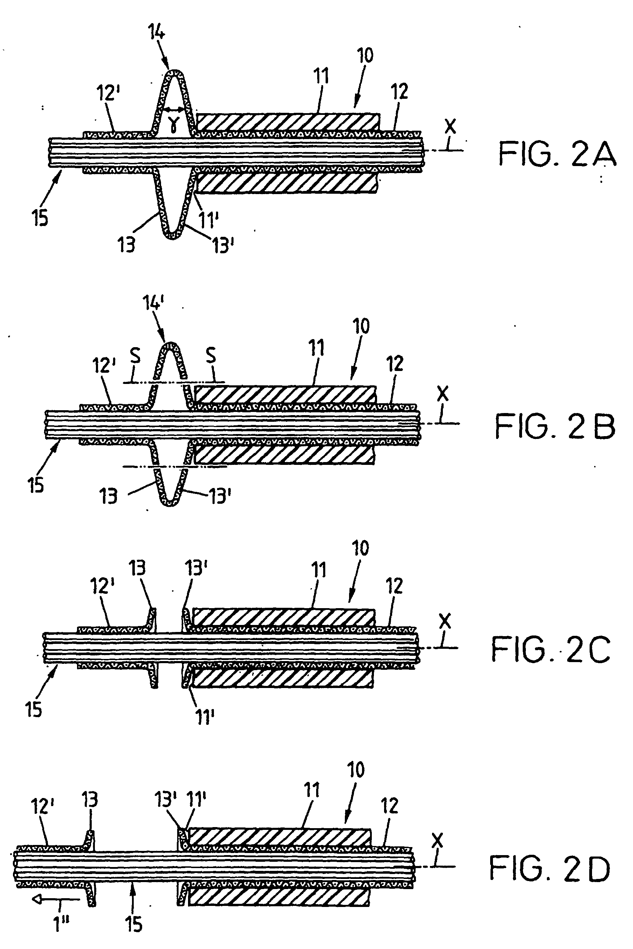

Bei der in Fig. 1H dargestellten Phase sind die beiden mit dem Isolationsmantel 11 und dem Teilstück 12' der Abschirmung 12 in Eingriff stehenden sowie im Abstand zueinander angeordneten Klemmvorrichtungen 35 und 45 geschlossen. In dieser Stellung wird mittels einer dem an der Stirnseite 11' des Isolationsmantels 11 anliegenden Ringwulst 14 der Abschirmung 12 entsprechend zuführbaren und gemäss Pfeilrichtung Y in Umfangsrichtung um die Längsachse X des Kabels 10 herumführbaren Schneideinheit 20 ein im Profilquerschnitt etwa Λ-förmig (keilförmig) augsgebildetes zirkuläres Teilstück 14' (Fig.2) des Ringwulstes 14 unmittelbar am Isolationsmantel 11 abgeschnitten und entfernt.

Bei einem weiteren Ausführungsbeispiel besteht jedoch auch die Möglichkeit, dass die Schneideinheit 20 aus einer nicht dargestellten Ruhestellung durch eine etwa quer zur Längsrichtung des Kabels 10 orientierte Schwenkbewegung der Abschirmung 12 zugeführt und in der eingeschwenkten Lage arretiert, Anschliessend wird das Kabel 10 um dessen Längsachse X in Pfeilrichtung Y gedreht und dabei der in Umfangsrichtung um die Schneideinheit 20 herumgeführte Ringwulst 14 von zwei relativ zueinander bewegbaren Schneidblättern abgeschnitten.

Bei der in Fig. 1K dargestellten Phase werden die beiden Klemmvorrichtungen 35 und 45 synchron oder nacheinander gemäss Pfeilrichtung 2' und 3' geöffnet und das Kabel 10 gemäss Pfeilrichtung 5 aus den beiden Klemmvorrichtungen 35,45 herausgezogen. Das nach dem Schneidvorgang noch vorhandene und die elektrischen Leiter 15 umhüllende Teilstück 12' der Abschirmung 12 wird entweder durch geringen Anpressdruck der ersten Klemmvorrichtung 35 beim Herausziehen gemäss Pfeilrichtung 5 automatisch oder aber nach dem Herausziehen aus der ersten Klemmvorrichtung 35 manuell von den elektrischen Leitern 15 entfernt.

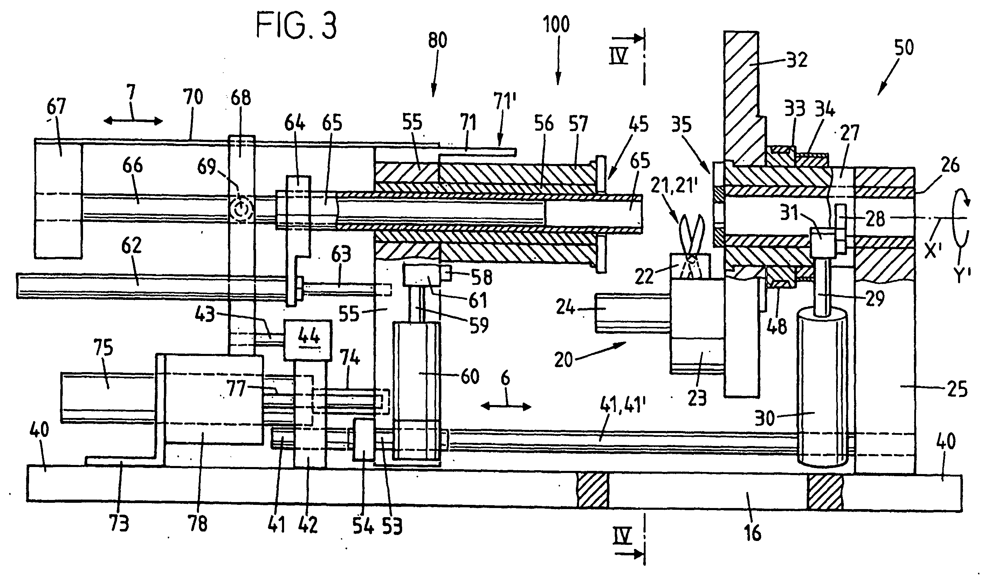

Die Mittel für die in Pfeilrichtungen 1,1' und 2,2' sowie 3,3' und 4,4' sowie 5 orientierten Bewegungen der beiden Klemmvorrichtung 35,45 sowie die damit wirkverbundenen Funktionselemente und die zugeordneten Antriebsmittel für die um die Längsachse X des Kabels 10 in Umfangsrichtung Y orientierte Bewegung der Schneideinheit 20 werden nachstehend anhand der Figuren 3 bis 5 beschrieben.

In den Figuren 2A bis 2D sind in grösserem Massstab die im wesentlichen den Abtrennvorgang des Ringwulstes 14 zeigenden Phasen dargestellt. In der in Fig. 2A dargestellten Phase erkennt man das Kabel 10, den Isolationsmantel 11, die Abschirmung 12, die koaxial darin angeordneten elektrischen Leiter 15 sowie den infolge der Eigenelastizität in axialer Richtung geringfügig gespreizten Ringwulst 14 der vorgängig zusammengepressten Abschirmung 12. Der am äuseren Umfang im Profilquerschnitt etwa A-förmig keilförmig ausgebildete Ringwulst 14 ist mit der ersten Seitenwand 13' an der Stirnseite 11' des Isolationsmantels 11 abgestützt, wobei die gegenüberliegende zweite Seitenwand 13 im Abstand zu der ersten Seitenwand 13' angeordnet ist. Die beiden Seitenwände 13 und 13' des Ringwulstes 14 sind unter möglichst spitzem Winkel γ zueinander angeordnete so dass das abzuschneidende Teilstück 14' gemäss Fig. 2A von der Schneideinheit 20 optimal erfasst und abgeschnitten werden kann.

Bei der in Fig. 2B dargestellten Phase ist der Ringwulst 14 mittels der in Umfangsrichtung herumführbaren Schneideinheit 20 (Fig.1 H) entsprechend der eingezeichneten Schnittlinie S-S vorzugsweise direkt oberhalb des Isolationsmantels 11 abgeschnitten. Bei der in Fig. 2C dargestellten Phase ist das abgeschnittene Teilstück 14' des Ringwulstes 14 entfernt und man erkennt das an der Stirnseite 11' anliegende Teilstück der ersten Seitenwand 13' sowie das im Abstand dazu angeordnete Teilstück 12' der Abschirmung 12 mit der zweiten Seitenwand 13. In der in Fig. 2D dargestellten Phase ist das Teilstück 12' der Abschirmung 12 in Pfeilrichtung 1" teilweise von den elektrischen Leitern 15 abgezogen dargestellt.

Fig.3 zeigt eine in Ansicht und teilweise im Schnitt dargestellte Einrichtung 100 zur Durchführung der vorstehend beschriebenen Verfahrensschritte. Die Einrichtung 100 umfasst im wesentlichen eine erste Funktionseinheit 50 mit der ersten Klemmvorrichtung 35 sowie eine zweite Funktionseinheit 80 mit der zweiten Klemmvorrichtung 45. Die beiden Funkfionseinheiten 50 und 80 werden nachstehend im einzelnen beschrieben.

Die erste Funktionseinheit 50 umfasst einen feststehend auf einer Grundplatte 40 angeordneten ersten Lagerbock 25. In dem ersten Lagerbock 25 ist ein erstes Führungsrohr 26 und koaxial daran eine erste Spannhülse 27 angeordnet, wobei das erste Führungsrohr 26 sowie die erste Spannhülse 27 an dem einen Ende zur Aufnahme und Lagerung der einzelnen Funktionselemente der ersten Klemmvorrichtung 35 ausgebildet sind. An der ersten Spannhülse 27 ist eine zur Aufnahme der Schneideinheit 20 ausgebildete und um eine Längsachse X' in Pfeilrichtung Y' drehbar angetriebene Scheibe 32, eine damit in Wirkverbindung stehende und mit einer Aussenverzahnung versehene Antriebsscheibe 33 sowie ein mit nicht dargestellten Schleifkontakten versehener Schleifring 34 gelagert. An der ersten Spannhülse 27 ist weiterhin ein in nicht näher dargestellter Weise damit wirkverbundener Schwenkhebel 28 angeordnet, welcher mit dem anderen Ende an einem Kopfstück 31 gelagert ist. Das Kopfstück 31 steht zur Betätigung der ersten Klemmvorrichtung 35 über eine Kolbenstange 29 mit einem ersten Zylinder 30 in Wirkverbindung. Durch Aktivierung des ersten Zylinders 30 wird der Schwenkhebel 28 und die damit wirkverbundene erste Spannhülse 27 relativ zu dem ersten Führungsrohr 26 um die Längsachse X' gemäss Pfeilrichtung Y' geschwenkt und dadurch die erste Klemmvorrichtung 35 geschlossen oder geöffnet.

Die an der Scheibe 32 angeordnete und mit nicht dargestellten Mitteln befestigte Schneideinheit 20 umfasst eine Halterung 22 für zwei um eine Achse relativ zueinander bewegbare Schneidblätter 21,21' sowie einen mit einem Antrieb 23 wirkverbundenen und an einem Achskörper 24 gelagerten Antriebsmotor 24. Die an der Scheibe 32 angeordnete Schneideinheit 20 ist einerseits durch eine um den Achskörper 24' gemäss Pfeilrichtung M orientierte Schwenkbewegung der Längsachse X' beziehungsweise dem einge führten Kabel 10 zustellbar und andererseits zusammen mit der Scheibe 32 um die Längsachse 'X' in Pfeilrichtung Y' drehbar. Im Bereich der ersten Funktionseinheit 50 ist in der Grundplatte 40 eine Aussparung 16 angeordnet, durch welche das mittels der Schneideinheit 20 von der Abschirmung 12 des Kabels 10 abgetrennte Teilstück 14' des Ringwulstes 14 (Fig. 1H und Fig. 2B) in einen nicht dargestellten Behälter oder dergleichen fällt.

Die zweite Funktionseinheit 80 umfasst einen relativ zu dem feststehend an der Grundplatte 40 befestigten ersten Lagerbock 25 an zwei Führungsstangen 41,41' angeordneten verschiebbaren Tragkörper 55 sowie einen zweiten feststehend an der Grundplatte 40 angeordneten Lagerbock 42 für die Führungsstangen 41,41'. An dem zweiten Lagerbock 42 ist ein mit einer Kolbenstange 74 mit dem Tragkörper 55 in Wirkverbindung stehender Zylinder 75 angeordnet, mittels welchem der Tragkörper 55 mit den daran angeordneten Funktionselementen gemäss Doppelpfeilrichtung 6 relativ zu dem ersten feststehenden Lagerbock 25 verschiebbar ist. An der Grundplatte 40 ist weiterhin eine Halterung 73 und daran ein Stopzylinder 78 befestigt, welcher mit einem den zweiten Lagerbock 42 durchdringenden Kolben 77 mit dem relativ zu der ersten Funktionseinheit 50 verschiebbaren Tragkörper 55 wirkverbunden ist.

In dem Tragkörper 55 ist ein zweites Führungsrohr 56 und koaxial daran eine zweite Spannhülse 57 angeordnet, wobei das zweite Führungrohr 56 sowie die zweite Spannhülse 57 an dem einen Ende zur Aufnahme und Lagerung der einzelnen Funktionselemente der zweiten Klemmvorrichtung 45 ausgebildet sind. An der zweiten Spannhülse 57 ist in nicht näher dargestellter Weise ein damit wirkverbundener zweiter Schwenkhebel 58 angeordnet, welcher mit dem anderen Ende an einem Kopfstück 61 gelagert ist. Zur Betätigung der zweiten Klemmvorrichtung 45 steht das Kopfstück 61 über eine Kolbenstange 59 mit einem zweiten Spannzylinder 60 in Wirkverbindung. Durch Aktivierung des zweiten Spannzylinders 60 wird der Schwenkhebel 58 und die damit wirkverbundene zweite Spannhülse 57 relativ zu dem zweiten Führungsrohr 56 um die Längsachse X' gemäss Pfeilrichtung Y' geschwenkt und dadurch die zweite Klemmvorrichtung 45 geschlossen oder geöffnet. Bei zurückgezogener Stellung (nicht dargestellt) der Kolbenstange 59 in den zweiten Spannzylinder 60 ist die Klemmvorrichtung 45 beispielsweise geöffnet. Der zweite Spannzylinder 60 ist mit dem unteren Teilstück an einem Achszapfen 53 gelagert und dieser in einer an dem Tragkörper 55 in nicht dargestellter Weise befestigten Halterung 54 gelagert.

In dem zweiten Führungsrohr 56 ist ein dasselbe in axialer Richtung durchdringendes und zur Aufnahme des Kabels 10 (Fig.1) ausgebildetes Fangrohr 65 koaxial angeordnet, welches an dem der zweiten Klemmvorrichtung 45 gegenüberliegenden Ende in einem Halteteil 64 gelagert und damit wirkverbunden ist. An dem Halteteil 64 ist ein mit einer Kolbenstange 63 in dem Tragkörper 55 abgestützter Zylinder 62 angeordnet. Durch Betätigung des Zylinders 62 kann das Halteteil 64 mit dem Fangrohr 65 bei geöffneter Stellung der zweiten Klemmvorrichtung 45 zur Aufnahme des eingeschobenen Kabels 10 (Fig.1) in axialer Richtung relativ zu der ersten Klemmvorrichtung 35 verstellt werden.

In dem Fangrohr 65 ist ein in axialer Richtung verschiebbares und als Anschlag für das Kabel 10 ausgebildetes Stellglied 66 angeordnet, welches in einem Tragarm 68 gelagert und mittels einem über eine Kolbenstange 43 damit wirkverbundenen Antrieb 44 verschiebbar ist. In dem Tragarm 68 ist eine Feststellschraube 69 angeordnet, mittels welcher das Stellglied 66 gegen axiales Verschieben gesichert und fixiert werden kann. An dem hinteren freien Ende des Stellgliedes 66 ist ein Haltestück 67 angeordnet und mit nicht dargestellten Mitteln befestigt. An dem Haltestück 67 ist eine längliche und in Richtung des verschiebbaren Tragkörpers 55 orientierte sowie an dem Tragarm 68 geführte Justierschiene 70 befestigt. Die Justierschiene 70 ist in Bezug auf ein an dem verschiebbaren Tragkörper 55 angeordnetes und mit einer nicht näher dargestellten Masseinteilung 71' versehenes Auflageteil 71 in Doppelpfeilrichtung 7 verschiebbar. Die in Abhängigkeit von der abzuschneidenden Abschirmung 12 des Kabels 10 (Fig.1) abhängige Position und die davon abhängige Verstellbewegung des als Anschlag ausgebildeten Stellgliedes 66 in dem Fangrohr 65 wird im wesentlichen mittels des über die Kolbenstanstange 43 mit dem Tragarm 68 wirkverbundenen Antriebs 44 erreicht.

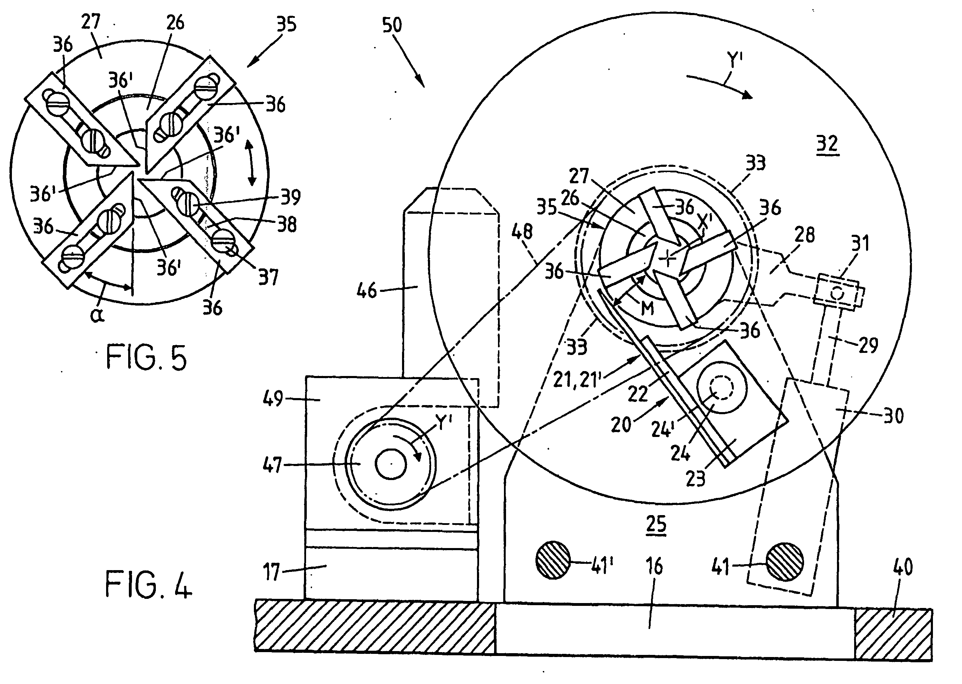

Fig. 4 zeigt die gemäss der in Fig.3 eingezeichneten Linie IV-IV im Schnitt dargestellte erste Funktionseinheit 50 und man erkennt die Grundplatte 40 mit dem feststehend daran angeordneten ersten Lagerbock 25, die in Pfeilrichtung Y' drehbar angetriebene Scheibe 32, die erste Klemmvorrichtung 35 mit schematisch und in geöffneter Stellung dargestellten Klemmstücken 36 sowie die an der Scheibe 32 angeordnete und mit nicht dargestellten Mitteln befestigte Schneideinheit 20 mit den Elementen 21,21',22,23,24 und 24'. Weiterhin erkennt man die beiden in dem ersten Lagerbock 25 angeordneten und gelagerten Führungsstangen 41 und 41' sowie den an der einen Führungsstange 41 gelagerten ersten Spannzylinder 30 mit der Kolbenstange 29, dem Kopfstück 31 und den daran gelagerten und in Fig.4 teilweise dargestellten Schwenkhebel 28. An der Grundplatte 40 ist weiterhin eine zur Aufnahme und Befestigung eines Lagerteils 49 ausgebildete Auflage 17 angeordnet. Das Lagerteil 49 dient zur Aufnahme eines schematisch dargestellten Antriebsaggregats 46 und eines daran gelagerten und damit wirkverbundenen Zahnrades 47. Das Zahnrad 47 steht über einen mit einer nicht dargestellten Verzahnung versehenen Antriebsriemen 48 mit der am ersten Lagerbock 25 gelagerten Zahnscheibe 33 für die in Pfeilrichtung Y' orientierten Drehbewegung der Scheibe 32 in Eingriff.

Fig.5 zeigt die in grösserem Massstab dargestellte und an der ersten Funktionseinheit 50 gemäss Fig.4 angeordnete erste Klemmvorrichtung 35 und man erkennt die erste Spannhülse 27, das koaxial darin angeordnete erste Führungrohr 26 sowie mehrere in Umfangsrichtung verteilt angeordnete Klemmstücke 36. Die Klemmstücke 36 sind jeweils mit einem Langloch 38 versehen und mit einer ersten Schraube 37 an der ersten Spannhülse 27 und einer zweiten Schraube 39 an dem ersten Führungsrohr 26 gehalten. An dem einen Ende ist das einzelne Klemmstück 36 mit einer in Bezug auf die eine Längsseite unter einem Winkel α, beispielsweise unter einem Winkel α von etwa 45° abgeschrägt ausgebildeten Klemmfläche 36' versehen. Die Klemmflächen 36' der einzelnen Klemmstücke 36 sind derart ausgebildet, dass der Isolationsmantel 11 des Kabels 10 während des Klemm- und Haltevorgangs nicht beschädigt wird. Zudem müssen die Klemmflächen 36' eine sichere Fixierung des Kabels 10 während des zirkulären Schneidvorgangs gewährleisten. In Fig.5 sind die einzelnen Klemmstücke 36 in weitgehend geschlossener Stellung dargestellt.

An dieser Stelle wird darauf hingewiesen, dass die zweite Klemmvorrichtung 45 mit den einzelnen Funktionselementen für die zweite Funktionseinheit 80 (Fig.3) vorzugsweise analog der verstehend beschriebenen ersten Klemmvorrichtung 35 ausgebildet ist.

## Patentansprüche

1. Verfahren zum Abtrennen und Entfernen der Abschirmung (12) von einem Kabel (10), bei welchem mindestens an einem Kabelende durch Ablängen und Entfernen eines Isolationsmantel-Teilstücks die in axialer Richtung des Kabels (10) orientierte und die elektrischen Leiter (15) umhüllende Abschirmung (12) freigelegt und klemmend gehalten in axialer Richtung zu einem in Bezug auf den ebenfalls klemmend gehaltenen Isolationsmantel (11) grösseren und in Umfangsrichtung aufweitend nach aussen orientierten Ringwulst (14) zusammengeschoben und zusammengepresst wird, **dadurch gekennzeichnet, dass** dem zwischen zwei in axialer Richtung des Kabels (10) im Abstand zueinander angeordneten und relativ zueinander verstellbaren Klemmvorrichtungen (35;45) positionierten Ringwulst (14) eine etwa quer zur Längsachse (X) in Richtung des Kabels (10) einschwenkbare und mit zwei relativ zueinander bewegbaren Schneidblättern (21,21') versehene Schneideinheit (20) zugeführt und mittels derselben ein die Abschirmung (12) trennendes zirkuläres Teilstück (14') abgeschnitten wird.

2. Verfahren nach Anspruch 1, **dadurch gekenazeichnet, dass** die Schneideinheit (20) aus einer etwa quer zur Längsachse (X) des Kabels (10) orientierten Ruhestellung dem zusammengepressten Ringwulst (14) zugeführt und durch eine um den Ringwulst (14) herumgeführte Bewegung der Schneideinheit (20) das zirkuläre Teilstück (14') durch Öffnen und Schliessen der beiden Schneidblätter (21,21') unmittelbar am Isolationsmantel (11) in Umfangsrichtung abgeschnitten wird.

3. Verfahren nach Anspruch 1, **dadurch gekennzeichnet, dass** die Schneideinheit (20) aus einer etwa quer zur Längsachse (X) des Kabels (10) orientierten Ruhestellung dem zusammengepressten Ringwulst (14) zugeführt und durch eine relativ zu der Schneideinheit (20) um die Längsachse (X) orientierte Drehbewegung des Kabels (10) das zirkuläre Teilstück (14') durch Öffnen und Schliessen der beiden Schneidblätter (21,21') unmittelbar am Isolationsmantel (11) in Umfangsrichtung abgeschnitten wird.

4. Verfahren nach einem der Ansprüche 1 bis 3, **dadurch gekennzeichnet, dass** die beiden Schneidblätter (21,21') der Schneideinheit (20) elektromotorisch relativ zueinander bewegbar angetrieben werden.

5. Verfahren nach Anspruch 1, **dadurch gekennzeichnet, dass** der zusammengeschobene Ringwulst (14) der Abschirmung (12) mit weitgehend aneinanderliegenden kreisringförmigen Seitenwänden (13',13") zu dem in Umfangsrichtung oberhalb des Isolationsmantels (11) mit spitzem Winkel (γ) im Profilquerschnitt etwa A-förmig ausgebildeten zirkulären Teilstück (14') zusammengepresst wird.

6. Einrichtung zum Abtrennen und Entfernen der mindestens an einem Ende durch Ablängen eines Isolationsmantel-Teilstücks freigelegten Abschirmung von einem elektrischen Kabel, bestehend aus einem zum Einführen des Kabels (10) ausgebildeten Lagerbock (25) mit einer ersten Klemmvorrichtung (35) sowie einem zum Einschieben des Kabels (10) mit gleicher Achsrichtung relativ zu dem feststehenden Lagerbock (25) verschiebbaren Tragkörper (55) mit einer zweiten Klemmvorrichtung (45), mittels welcher die Abschirmung (12) in Richtung der ersten Klemmvorrichtung (35) zusammengeschoben und dabei zu einem in Bezug auf den Isolationsmantel (11) grösseren Ringwulst (14) zusammenpressbar ist, **gekennzeichnet durch** eine zwischen den im Abstand zueinander angeordneten Klemmvorrichtungen (35;45) etwa quer zu der Längsachse (X) des Kabels (10) dem zusammengepressten Ringwulst (14) zuführbare und mit zwei relativ zueinander bewegbaren Schneidblättern (21,21') versehene Schneideinheit (20), mittels welcher ein zirkuläres Teilstück (14') des Ringwulstes (14) abschneidbar ist.

7. Einrichtung nach Anspruch 6, **dadurch gekennzeichnet, dass** die Schneideinheit (20) an einer an dem feststehenden Lagerbock (25) angeordneten und um die Längsachse (X) drehbar angetriebenen Scheibe (32) gelagert und infolge einer um die Längsachse (X) orientierten Drehbewegung der Scheibe (32) dem zusammengepressten Ringwulst (14) des Kabels (10) zuführbar ist.

8. Einrichtung nach einem der Ansprüche 6 und 7, **dadurch gekennseichnet,** dass die beiden relativ zueinander bewegbaren Schneidblätter (21,21') der Schneideinheit (20) elektromotorisch antreibbar sind.

9. Einrichtung nach Anspruch 6, **dadurch gekennzeichnet, dass** das mit der zweiten Klemmvorrichtung (45) versehene Tragteil (55) an zwei quer zur Bewegungsrichtung im Abstand zueinander angeordneten Führungsstangen (41,41') relativ zu der ersten Klemmvorrichtung (35) verschiebbar ist und die beiden Führungsstangen (41,41') in dem ersten Lagerbock (25) sowie in einem im Abstand dazu angeordneten zweiten Lagerbock (42) angeordnet und gelagert sind.

10. Einrichtung nach Anspruch 6, **dadurch gekennzeichnet, dass** die beiden Klemmvorrichtungen (35:45) jeweils an den einander zugewandten Stirnseiten mindestens zwei in Umfangsrichtung verteilt an einer Spannhülse (27;57) sowie an einem koaxial darin angeordneten Führungsrohr (26;56) gelagerte Klemmstücke (36) aufweist, wobei die einzelnen Klemmstücke (36) durch eine um die gemeinsame Längsachse (X) orientierte Drehbewegung der jeweils in dem ersten Lagerbock (25) beziehungsweise in dem Tragkörper (55) gelagerten Spannhülse (27;57) relativ zu dem Führungsrohr (26;56) zum Öffnen oder Schliessen der beiden Klemmvorrichtungen (35;45) verstellbar sind.

11. Einrichtung nach Anspruch 10, **dadurch gekennzeichnet, dass** an den einander zugewandten Stirnseiten der Spannhülse (27;57) und des Führungsrohres (26;56) jeweils vier gleichmässig in Umfangsrichtung verteilt zueinander angeordnete und zum Halten des Kabels (10) mit einer abgeschrägten Klemmfläche (36') versehene Klemmstücke (36) angeordnet sind.

12. Einrichtung nach Anspruch 11, **dadurch gekennzeichnet, dass** die einzelnen Klemmflächen (36') der Klemmstücke (36) mit einer Riffelung oder mit einer Gummierung versehen sind.

13. Einrichtung nach Anspruch 10, **dadurch gekennzeichnet, dass** koaxial in dem Führungsrohr (56) der zweiten Klemmvorrichtung (45) ein in axialer Richtung verschiebbares und zur Aufnahme des Kabels (10) ausgebildetes Fangrohr (65) angeordnet ist.

14. Einrichtung nach Anspruch 13, **dadurch gekennzeichnet, dass** koaxial in dem Fangrohr (65) der zweiten Klemmvorrichtung (45) ein in Abhängigkeit des freigelegten Kabelendes in axialer Richtung verschieb- und feststellbares Stellglied (66) angeordnet ist.

15. Einrichtung nach Anspruch 14, **dadurch gekennzeichnet, dass** das in dem Fangrohr (65) verschiebbar angeordnete Stellglied (66) mittels einer Justierschiene (70) und daran angeordneter Masseinteilung (71') ein- und feststellbar ist.

## Claims

1. A method for separating and removing the shielding (12) from a cable (10), in which the shielding (12) oriented in an axial direction of the cable (10) and enclosing the electric conductor (15) is laid bare at least at one cable end by cutting and removing an insulating sheath part piece, and held clamped in an axial direction and is telescoped and compressed to an annular ring (14), larger with respect to the likewise clamped insulating sheath (11), and oriented to open out externally in a peripheral direction,
**characterised in that**
a cutting unit (20), which can be swung approximately transversely to the longitudinal axis (X) in the direction of the cable (10), and is fitted with two cutting blades (21, 21') movable relative to one another, is fed to the annular ring (14) positioned between two clamping fixtures (35: 45), which can be moved in an axial direction of the cable (10), arranged at a distance from one another and relative to one another, and by means of the same a circular part piece (14') separating the shielding (12) is cut off.

2. The process as claimed in Claim 1,
**characterised in that**
the cutting unit (20) is guided out of a rest position oriented approximately transversely to the longitudinal axis (X) of the cable (10) to the compressed annular ring (14), and the circular part piece is cut off by a motion of the cutting unit (24) (14') described about the annular ring (14) by opening and closing both cutting blades (21, 21') directly on the insulating sheath (11) in a peripheral direction.

3. The process as claimed in Claim 1,
**characterised in that**
the cutting unit (20) is guided out of a rest position oriented approximately transversely to the longitudinal axis (X) of the cable (10) to the compressed annular ring (14), and the circular part piece (14') is cut off in a peripheral direction by a torsional motion oriented relative to the cutting unit (20) about the longitudinal axis (X) of the cable (10) by opening and closing both cutting blades (21, 21') directly on the insulating sheath (11).

4. The process as claimed in any one of Claims 1 to 3, **characterised in that** both cutting blades (21, 21') of the cutting unit (20) are driven by electromotor to move relative to one another.

5. The process as claimed in Claim 1, **characterised in that** the compressed annular ring (14) of the shielding (22) with extensively superposed circular side walls (13', 13") is compressed to the circular part piece (19'), configured approximately λ-shaped in cross-section, in a peripheral direction above the insulating sheath (11) at an acute angle (γ).

6. A device for separating and removing the shielding from an electric cable laid bare at least at one end by cutting an insulating sheath part piece, comprising a bearing block (25), designed to feed in the cable (10), with a first clamping fixture (35) and a bearing element (55), for feeding in the cable (10), which can be moved with the same axial alignment relative to the fixed bearing block (25), with a second clamping fixture (45), by means of which the shielding (12) is compressed in the direction of the first clamping fixture (35) and at the same time is compressed to a larger annular ring (14) with respect to the insulating sheath (11), **characterised by** a cutting unit (20) which can be fed to the compressed annular ring (14) between the clamping fixtures (35; 65) arranged at a distance from one another approximately transversely to the longitudinal axis (X) of the cable (10) and fitted two cutting blades (21, 21') which can be moved relative to one another, by means of which a circular part piece (14') of the annular ring (14) can be cut off.

7. The device as claimed in Claim 6, **characterised in that** the cutting unit (20) is supported on a disc (32) arranged on the fixed bearing block (25) and driven in rotation about the longitudinal axis (X) and as a result of a torsional motion of the disc (32) oriented about the longitudinal axis (X) it can be fed to the compressed annular ring (14) of the cable (10).

8. The device as claimed in any one of Claims 6 and 7, **characterised in that** both cutting blades (21, 21') of the cutting unit (20), which can be moved relative to one another, are driven by electromotor.

9. The device as claimed in Claim 6, **characterised in that** the bearing element (55) fitted with the second clamping fixture (45) can be moved on two guide rods (91, 92') transversely to the direction of motion and arranged at a distance from one another relative to the first clamping fixture (35), and both guide rods (41, 41') are arranged and supported in the first bearing block (25) and arranged in a second bearing block (42) at a distance therefrom.

10. The device as claimed in Claim 6, **characterised in that** on the front sides facing one another both clamping fixtures (35, 45) have in each case at least two clamping pieces (36) distributed in a peripheral direction on a clamping sleeve (27; 57) and supported on a guide tube (26; 56) arranged coaxially therein, whereby the individual clamping pieces (36) can be displaced by a torsional motion oriented about the common longitudinal axis (X) of the clamping sleeve (27; 57) in each case supported in the first bearing block (25) or respectively in the bearing element (55), relative to the guide tube (26; 56) for opening or closing both clamping fixtures (35; 45).

11. The device as claimed in Claim 10, **characterised in that** four clamping pieces (36) provided with a chamfered clamping surface (36') are arranged in each case distributed uniformly relative to one another in a peripheral direction and for holding the cable (10) on the front sides of the clamping sleeve (27; 57) and of the guide tube (26; 56) facing one another.

12. The device as claimed in Claim 11, **characterised in that** the individual clamping surfaces (36') of the clamping pieces (36) are provided with fluting or with a rubber coating.

13. The device as claimed in Claim 10, **characterised in that** a collecting tube (65) is arranged to move in an axial direction coaxially in the guide tube (56) of the second clamping fixture (45) and is designed to receive the cable (14).

14. The device as claimed in Claim 13, **characterised in that** an actuator (66), which can be moved and fixed in an axial direction depending on the freed cable end, is arranged coaxially in the collecting tube (65) of the second clamping fixture (45).

15. The device as claimed in Claim 14, **characterised in that** the actuator (66) arranged displaceably in the collecting tube (65) can be adjusted and fixed by means of an alignment rail (70) and graduation (71') arranged thereon.

## Revendications

1. Procédé pour la séparation et l'enlèvement du blindage (12) d'un câble (10), dans lequel le blindage (12) orienté dans le sens axial du câble (10) et enveloppant les conducteurs (15) électriques, dénudé et maintenu par serrage au moins sur une extrémité de câble par la mise à la longueur et l'enlèvement d'un tronçon d'enveloppe d'isolation, est regroupé et comprimé dans le sens axial pour obtenir un renflement annulaire (14) assez grand par rapport à l'enveloppe d'isolation (11) maintenue également par serrage et orientée vers l'extérieur en s'élargissant dans le sens périphérique, **caractérisé en ce qu'**une unité de coupe (20), pouvant être basculée vers l'intérieur à peu près transversalement à l'axe longitudinal (X) en direction du câble (10) et pourvue de deux lames de coupe (21, 21') pouvant être déplacées l'une par rapport à l'autre est amenée au renflement annulaire (14) positionné entre deux dispositifs de serrage (35 ; 45) disposés dans le sens axiale du câble (10) à distance l'un de l'autre et pouvant être déplacés l'un par rapport à l'autre et un tronçon (14') circulaire séparant le blindage (12) est coupé par cette même unité.

2. Procédé selon la revendication 1, **caractérisé en ce que** l'unité de coupe (20) est amenée d'une position de repos orientée à peu près transversalement à l'axe longitudinal (X) du câble (10) au renflement annulaire (14) comprimé et le tronçon (14') circulaire est coupé par un déplacement, guidé autour du renflement annulaire (14) de l'unité de coupe (20) par l'ouverture et la fermeture des deux lames de coupe (21, 21') directement sur l'enveloppe d'isolation (11) dans le sens périphérique.

3. Procédé selon la revendication 1, **caractérisé en ce que** l'unité de coupe (20) est amenée d'une position de repos orientée à peu près transversalement à l'axe longitudinal (X) du câble (10) au renflement annulaire (14) comprimé et le tronçon (14')circulaire est coupé par un mouvement de rotation, orienté autour de l'axe longitudinal (X) par rapport à l'unité de coupe (20), du câble (10) par l'ouverture et la fermeture des deux lames de coupe (21, 21') directement sur l'enveloppe d'isolation (11) dans le sens périphérique.

4. Procédé selon l'une quelconque des revendications 1 à 3, **caractérisé en ce que** les deux lames de coupe (21, 21') de l'unité de coupe (20) sont entraînées par un moteur électrique de façon à pouvoir se déplacer l'une par rapport à l'autre.

5. Procédé selon la revendication 1, **caractérisé en ce que** le renflement annulaire (14) regroupé du blindage (12) avec des parois latérales (13', 13") disposées largement les unes contre les autres et en forme d'anneau circulaire est comprimé pour former le tronçon (14') circulaire réalisé dans le sens périphérique au-dessus de l'enveloppe d'isolation (11) avec un angle aigu (γ) dans la section de profilé et à peu près en forme de A.

6. Appareil pour la séparation et l'enlèvement du blindage, dénudé sur au moins une extrémité par la mise à la longueur d'un tronçon d'enveloppe d'isolation, d'un câble électrique, comprenant un support de palier (25) conçu pour l'introduction du câble (10) avec un premier dispositif de serrage (35) et un corps support (55) pouvant coulisser pour l'introduction du câble (10) avec la même direction d'axe par rapport au support de palier (25) fixe avec un deuxième dispositif de serrage (45), au moyen duquel le blindage (12) est regroupé en direction du premier dispositif de serrage (35) et peut être comprimé pour former un renflement annulaire (14) plus grand par rapport à l'enveloppe d'isolation (11), **caractérisé par** une unité de coupe (20) pouvant être amenée au renflement annulaire (14) comprimé entre les dispositifs de serrage (35 ; 45) disposés à distance l'un de l'autre et à peu près transversalement à l'axe longitudinal (X) du câble (10) et pourvu de deux lames de coupe (21, 21') pouvant se déplacer l'une par rapport à l'autre, unité au moyen de laquelle un tronçon (14') circulaire du renflement annulaire (14) peut être coupé.

7. Appareil selon la revendication 6, **caractérisé en ce que** l'unité de coupe (20) est logée sur un disque (32) disposé sur le support de palier (25) fixe et entraîné de façon rotative autour de l'axe longitudinal (X) et peut être amené en raison d'un mouvement de rotation, orienté autour de l'axe longitudinal (X), du disque (32) au renflement annulaire (14) comprimé du câble (10) .

8. Appareil selon l'une quelconque des revendications 6 ou 7, **caractérisé en ce que** les deux lames de coupe (21, 21'), pouvant être déplacées l'une par rapport l'autre, de l'unité de coupe (20) peuvent être entraînées par un moteur électrique.

9. Appareil selon la revendication 6, **caractérisé en ce que** la partie support (55) pourvue du second dispositif de coupe (45) peut être déplacée par rapport au premier dispositif de serrage (35) sur deux tiges de guidage (41, 41') disposées à distance transversalement au sens de déplacement et les deux tiges de guidage (41, 41') sont disposées et logées dans le premier support de palier (25) et dans un second support de palier (42) disposé à distance du premier.

10. Appareil selon la revendication 6, **caractérisé en ce que** les deux dispositifs de serrage (35 ; 45) présentent respectivement sur les faces avant tournées l'une vers l'autre au moins deux pièces de serrage (36) réparties dans le sens périphérique et logées sur une douille de serrage (27 ; 57) ainsi que sur un tube de guidage (26 ; 56) disposé à l'intérieur sur le même axe, les pièces de serrage (36) individuelles pouvant être déplacées par un mouvement de rotation, orienté autour de l'axe longitudinal (X) commun, de la douille de serrage (27 ; 57) logée respectivement dans le premier palier de support (25) ou dans le corps support (55) par rapport au tube de guidage (26 ; 56) pour l'ouverture ou la fermeture des deux dispositifs de serrage (35 ; 45).

11. Appareil selon la revendication 10, **caractérisé en ce que** respectivement quatre pièces de serrage (36) disposées l'une par rapport à l'autre avec une répartition uniforme dans le sens périphérique et pourvues d'une surface de serrage (36') chanfreinée pour le maintien du câble (10) sont disposées sur les faces avant, tournées les unes vers les autres, de la douille de serrage (27 ; 57) et du tube de guidage (26, 56).

12. Appareil selon la revendication 11, **caractérisé en ce que** les surfaces de serrage (36') individuelles des pièces de serrage (36) sont pourvues d'un striage ou d'un caoutchoutage.

13. Appareil selon la revendication 10, **caractérisé en ce qu'**un tube récepteur (65) coulissant dans le sens axial et conçu pour le logement du câble (10) est disposé sur le même axe dans le tube de guidage (56) du second dispositif de serrage (45).

14. Appareil selon la revendication 13, **caractérisé en ce qu'**un actionneur (66) pouvant coulisser et être bloqué en fonction de l'extrémité de câble dénudée dans le sens axial sur le même axe dans le tube récepteur (65) du deuxième dispositif de serrage (45).

15. Appareil selon la revendication 14, **caractérisé en ce que** l'actionneur (66) disposé de façon coulissante dans le tube récepteur (65) peut être réglé et bloqué au moyen d'un rail d'ajustage (70) et d'une graduation (71') disposée dessus.
